**Europäisches Patentamt**

**European Patent Office**

**Office européen des brevets**

(19)

(11) Numéro de publication: **0 013 011**
**B1**

(12) ## FASCICULE DE BREVET EUROPEEN

(45) Date de publication du fascicule de brevet: **30.12.81**

(51) Int. Cl.³: **B 29 J 5/00**

(21) Numéro de dépôt: **79105305.1**

(22) Date de dépôt: **21.12.79**

(54) **Procédé de moulage de panneaux de fibres de bois.**

(30) Priorité: **28.12.78 FR 7836746**

(43) Date de publication de la demande:
**09.07.80 Bulletin 80/14**

(45) Mention de la délivrance du brevet:
**30.12.81 Bulletin 81/52**

(84) Etats Contractants Désignés:
**AT DE GB IT NL SE**

(56) Documents cités:
**CH - A - 391 287**
**FR - A - 1 534 153**
**FR - A - 2 342 843**
**US - A - 3 212 948**
**US - A - 3 758 357**

(73) Titulaire: **ISOREL S.A. Société anonyme dite:**
**3, Avenue du Général de Gaulle**
**F-92800 Puteau (Hauts-de-Seine) (FR)**

(72) Inventeur: **Etienne, Honoré**
**Route de Vienne**
**Villemoirieu 38460 Crémieu (FR)**
Inventeur: **Paugam, François**
**14, allée Jacques Ibert Bâtiment 103**
**F-91240 St Michel S/Orge (FR)**
Inventeur: **Lorber, Jean Marie**
**66, Bd La Fontaine**
**F-67200 Strasbourg (FR)**

(74) Mandataire: **Simonnot, Bernard et al,**
**Cabinet Simonnot 49, Rue de Provence**
**F-75442 Paris Cédex 09 (FR)**

Courier Press, Leamington Spa, England.

Procédé de moulage de panneaux de fibres de bois

La présente invention concerne un procédé de moulage de panneaux de fibres de bois, afin de les conformer et de les rendre applicables à la réalisation directe d'objets en forme tels que par exemple des éléments de carrosserie d'automobiles.

On connaît déjà un procédé de cintrage de tels panneaux, dans lequel on part d'un panneau fini dont nottamment le produit d'encollage est durci, on effectue une aspersion ou une immersion dudit panneau avec de l'eau portée à une température comprise entre 50 et 100°C pendant 3 à 40 secondes et l'on effectue le cintrage à chaud du panneau humide.

Ce procédé implique, d'une part, une humidification modérée du panneau, afin d'éviter son éclatement au cintrage et, d'autre part, une humidification suffisante pour lui conférer une ductilité suffisante et, à une température suffisante, pour obtenir le ramollissement nécessaire du liant, généralement phénolique.

Dans ces conditions, l'humidification ne doit pas être réalisée à coeur, afin d'éviter la création d'une pression interne due à la vapeur lors du cintrage à chaud. Cependant, afin de rendre cette humidification suffisante, il y a généralement lieu de réaliser des perforations dans le panneau, afin de tenter d'homogénéiser l'impregnation par l'eau.

Un tel procédé implique une installation précise et coûteuse, sans toutefois assurer de façon régulière la qualité des produits conformés obtenus.

On connaît également de par le brevet suisse No 391 287 un procédé de fabrication d'objets moulés, dans lequel on part des copeaux de fois encollés et l'on effectue un prémoulage et un moulage selon deux temps de pression appliqués brutalement et séparés par une décompression intermédiaire, avec échappement de la vapeur. Le prémoulage est effectué à une température inférieure à la température de durcissement du liant et le moulage, à une température supérieure à celle du durcissement. Ce procédé est axé sur la rapidité de fabrication, mais il est malcommode à mettre en oeuvre du fait qu'il implique d'introduire dans un moule les copeaux prétraités, donc avec risque de manque d'homogénéité, et d'effectuer un mouillage par une simple pulvérisation superficielle d'eau avant de procéder au moulage proprement dit.

La présente invention vise à remédier à ces inconvénients en fournissant un procédé simple à mettre en oeuvre mais parfaitement efficace, pour le moulage de panneaux du type ci-dessus.

Conformément à l'invention, on encolle les fibres au moyen d'une résine phénolique polymérisable, on effectue le pressage à plat d'un panneau de base à une température inférieure à la température de durcissement de la résine, on effectue une immersion de ce panneau plat dans de l'eau à 90°C environ jusqu'à imprégnation à coeur, puis on réalise le moulage proprement dit à une température sensiblement égale à la température de durcissement de la résine, selon un premier temps de pression comportant une montée progressive en pression pouvant atteindre 30 secondes environ et un premier palier pendant 9 à 60 secondes environ, et un second temps de pression comportant une montée rapide en pression et un second palier maintenu pendant une durée suffisante pour le durcissement de la résine, en opérant une décompression intermédiaire entre les deux temps avec échappement de la vapeur, faute de quoi, un éclatement du panneau risquerait de se produire.

On établit des paliers de pression à une valeur comprise entre 5 et 20 × 10⁵ Pa environ et l'on établit la chute de pression par ouverture de la presse de moulage.

D'autres caractéristiques et avantages de la présente invention ressortiront mieux de la description qui va suivre, donnée à titre d'exemple préférentiel non limitatif.

Comme mentionné plus haut, un panneau de fibres de bois fini contient généralement des liants de type phénolique qui augmentent la résistance interne, en particulier la rigidité. De ce fait, un tel panneau ne présente pas le degré de souplesse requis pour sa déformation à chaud et sous pression.

Conformément à l'invention, on part d'un panneau plat de fibres de bois, le meilleur résultat étant obtenu avec un panneau en résineux contenant des fibres plus longues que le panneau ordinaire. Il est également souhaitable que ce panneau ne soit pas surfacé, ce qui augmente sa souplesse lors de la déformation. On encolle les éléments de ce panneau de base avec une résine phénolique polymérisable seulement partiellement dans la presse humide. Le panneau ainsi fabriqué ne sera pas surchauffé et gardera ainsi des propriétés de souplesse. Ses propriétés mécaniques seront relativement faibles, mais seront augmentées lors du moulage à chaud. Le pourcentage de résine phénolique introduit peut atteindre 6% en poids. Ce panneau peut également contenir des cires en quantités non négligeables, de l'ordre de 3% environ. Cette composition permet au panneau, lors du trempage, d'absorber une quantité importante d'eau, sans pour autant perdre ses propriétés mécaniques. Il peut donc rester parfaitement manipulable. La durée de vie d'un tel panneau de base est d'environ trois mois avant qu'intervienne la polymérisation totale de la résine à température ambiante.

On part d'un panneau de base tel que décrit ci-dessus et on l'immerge dans de l'eau portée à 90—95°C pendant un temps pouvant atteindre 3 minutes et même davantage, ce qui permet à l'eau de pénétrer au coeur du panneau et donc de le mouiller entièrement, ce qui n'est pas obtenu au bout de quelques secondes. Le temps d'immersion dépend essentiellement des rayons de courbures de la pièce à obtenir. Il dépend également de la qualité du panneau fabriqué. Le but de ce mouillage à coeur est d'augmenter le degré de liberté entre les fibres et donc de pouvoir beaucoup plus déformer le panneau. Cette opération est facilitée par le fait que le panneau est fabriqué sans surchauffe, avec une résine partiellement polymérisée. On place ensuite le panneau ainsi imprégné entre poinçon et matrice chauffés à une température de 160 à 190°C dans une presse de moulage.

Si l'on ferme très rapidement la presse, le panneau risque de se déchirer, en particulier lorsque la déformation à obtenir est importante. C'est pourquoi, conformément à l'invention, on commence le cycle de pressée par une fermeture lente pouvant atteindre 30 secondes et dépendant essentiellement de la difficulté de la forme désirée. On maintient ensuite un premier palier de pression de 5 à 20 × 10⁵ Pa pendant 9 à 60 secondes. La tension de vapeur d'eau présente est alors élevée et l'on ouvre la presse pour permettre l'échappement de la vapeur, faute de quoi surviendrait un éclatement du panneau. Lorsque la vapeur est relâchée, par chute de pression, on referme la presse pour terminer la polymérisation de la résine selon un second palier de pression, de même valeur et de durée suffisante, et permettre de conférer la forme finale au panneau traité. On peut également, dans un premier temps, obtenir une préforme dans les cas particulièrement difficiles puis effectuer une réhumidification du panneau préformé avant un nouveau cycle final de pressée.

La Demanderesse a en outre trouvé d'une part que la déformation maximale augmente avec le taux de résine employé et, d'autre part, qu'on peut également obtenir un grainage de la pièce finie, par grainage du moule de la presse. En une seule opération, on peut ainsi obtenir une pièce finie avec, par exemple, un décor simili cuir.

Il est bien entendu que la présente invention n'a été décrite qu'à titre explicatif, mais nullement limitatif et qu'on pourra y apporter toute modification utile dans le domaine des équivalences techniques sans sortir de son cadre.

### Revendications

1. Procédé de moulage de panneaux de fibres de bois pour l'obtention d'objets en forme, dans lequel on encolle les fibres au moyen d'une résine phénolique polymérisable, on effectue prémoulage d'un panneau de base à une température inférieure à la température de durcissement de la résine ainsi qu'un mouillage du panneau par l'eau, et on effectue le moulage proprement dit par un pressage à chaud en deux temps avec décompression rapide intermédiaire et échappement de la vapeur procédé caractérisé par le fait qu'on effectue le prémoulage du panneau par pressage à plat, qu'on réalise le mouillage dudit panneau par imprégnation à coeur en l'immergeant dans de l'eau à 90°C environ, puis que l'on effectue le moulage proprement dit à une température sensiblement égale à la température de durcissement de la résine, selon un premier temps de pression comportant une montée progressive en pression pouvant atteindre 30 secondes environ et un premier palier pendant 9 à 60 secondes environ, et un second temps de pression comportant une montée rapide en pression et un second palier maintenu pendant une durée suffisante pour le durcissement de la résine.

2. Procédé selon la revendication 1, caractérisé par le fait qu'on établit des paliers de pression à une valeur comprise entre 5 et 20 × 10⁵ Pa environ et l'on établit la chute de pression par ouverture de la presse de moulage.

3. Procédé selon l'une des revendications 1 ou 2, caractérisé par le fait que le panneau de base renferme environ 6% en poids de résine phénolique.

4. Procédé selon l'une quelconque des revendications 1 à 3, caractérisé par le fait que le panneau de base renferme environ 3% en poids de cires.

5. Procédé selon l'une quelconque des revendications 1 à 4, caractérisé par le fait que l'on réalise une préforme puis une réhumidification du panneau préformé avant un nouveau cycle de pressée.

6. Procédé selon l'une quelconque des revendications 1 à 5, caractérisé par le fait que l'on effectue un grainage du panneau moulé par grainage du moule de la presse.

### Patentansprüche

1. Verfahren zur Pressformung von Platten aus Holzfasern zur Herstellung von gestatteten Gegenständen, wobei die Fasern mittels eines polymerisierbaren Phenolharzes geklebt werden, wobei eine Grundplatte bei einer niedrigen Temperatur als die Aushärtungstemperatur des Harzes vorgeformt wird und durch Wasser benetzt wird, und wobei eine Warmformung in zwei Stufen mit rascher zwischenzeitlicher Druckverminderung und Dampfentweichung vorgenommen wird, dadurch gekennzeichnet, dass die Vorformung der Platte flach stattfindet, dass die Benetzung der Platte durch Kernimprägnierung durchgeführt wird, indem die Platte ins Wasser bei ca. 90°C eingetaucht wird, und dass die Formung an sich bei einer Temperatur durchgeführt wird, die der Aushärtungstemperatur des Harzes annähernd gleich ist, in einer ersten Druckstufe mit allmählicher Drucksteigerung, die bis ungefähr 30 Sekunden dauern kann und mit einer ersten Zwischenstufe während ca. 9 bis 60 Sekunden, und in einer zweiten Druckstufe mit schneller Druckerhöhung und mit einer zweiten Zwischenstufe, die lang genug aufrechterhalten wird, damit das Harz aushärtet.

2. Verfahren nach Anspruch 1, dadurch gekennzeichnet, dass Druckzwischenstufe zwischen ca. 5 und 20 × 10⁵ Pa ausgelegt werden, und dass der Druckabfall durch Öffnung der Formpresse erreicht wird.

3. Verfahren nach Anspruch 1 oder 2, dadurch gekennzeichnet, dass die Grundplatte für ca. 6% ihres Gewichtes aus Phenolharz besteht.

4. Verfahren nach irgendeinem der Ansprüche 1 bis 3, dadurch gekennzeichnet, dass die Grundplatte für ca. 3% ihres Gewichtes aus Wachsen besteht.

5. Verfahren nach irgendeinem der Ansprüche 1 bis 4, dadurch gekennzeichnet, dass vor einem neuen Presszyklus eine Vorformung, dann eine Herbenetzung der vorgeformten Platte vorgenommen werden.

6. Verfahren nach irgendeinem Ansprüche 1 bis 5, dadurch gekennzeichnet, dass eine Flächenrauheit der geformten Platte durch Abstrahlen der Pressenform erreicht wird.

## Claims

1. Method for moulding wood fibers panels for obtaining formed articles, in which the fibers are glued by means of a polymerizable phenolic resin, a pre-moulding of a basic panel is carried out at a temperature lower than the setting temperature of the resin, together with a water moistening of said panel, and a hot-pressing is effected in two steps with intermediate quick decompression and exhaust of steam, method characterized in that the pre-moulding of the panel is carried out flat, the moistening of said panel is effected by heart-impregnation through dipping in water at about 90°C, and the moulding itself is carried out at a temperature substantially equal to the setting temperature of said resin, through a first pressing step including a progressive pressure raising of about 30 seconds and a first pressure level during about 9 to 60 seconds, and a second pressing step including a quick pressure raising and a second pressure level maintained during a period which is sufficient for the setting of said resin.

2. Method according to claim 1, characterized in that the pressure levels are established at a value of about 5 to 20 × 10⁵ Pa and the pressure fall is established through opening of the moulding press.

3. Method according to any one of claims 1 or 2, characterized in that the basic panel contains about 6% by weight of phenolic resin.

4. Method according to any one of claims 1 to 3, characterized in that the basic panel contains about 3% by weight of waxes.

5. Method according to any one of claims 1 to 4, characterized in that a preformed shape and a re-moistening of the preformed panel are carried out before a further pressing cycle is realized.

6. Method according to any one of claims 1 to 5, characterized in that a sandblasting of the moulded panel is carried out through sandblasting of the mould of the moulding press.